(19) **Europäisches Patentamt / European Patent Office / Office européen des brevets**

(11) **EP 3 120 611 B1**

(12) **EUROPEAN PATENT SPECIFICATION**

(45) Date of publication and mention
of the grant of the patent:
**13.06.2018  Bulletin 2018/24**

(51) Int Cl.:
**H04W 52/16** *(2009.01)*    **H04W 52/24** *(2009.01)*
**H04W 52/34** *(2009.01)*    **H04W 52/40** *(2009.01)*
**H04W 24/02** *(2009.01)*

(21) Application number: **14886606.4**

(22) Date of filing: **21.03.2014**

(86) International application number:
**PCT/SE2014/050349**

(87) International publication number:
**WO 2015/142238 (24.09.2015 Gazette 2015/38)**

(54) **METHOD PERFORMED IN A NETWORK NODE FOR CLASSIFYING A NEIGHBOUR CELL AND A NETWORK NODE**

IN EINEM NETZWERKKNOTEN AUSGEFÜHRTES VERFAHREN ZUR KLASSIFIZIERUNG EINER NACHBARZELLE UND NETZWERKKNOTEN

PROCÉDÉ EXÉCUTÉ DANS UN NOEUD DE RÉSEAU POUR CLASSIFIER UNE CELLULE VOISINE ET NOEUD DE RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.01.2017  Bulletin 2017/04**

(73) Proprietor: **Telefonaktiebolaget LM Ericsson (publ)**
**164 83 Stockholm (SE)**

(72) Inventors:
• **PAKNIAT, Parisa**
**S-602 39 Norrköping (SE)**

• **KELLER, Markus**
**S-58724 Linköping (SE)**
• **EKEMARK, Sven**
**S-74340 Storvreta (SE)**
• **HENRIKSSON, Daniel**
**S-58332 Linköping (SE)**

(74) Representative: **Zacco Sweden AB**
**P.O. Box 5581**
**114 85 Stockholm (SE)**

(56) References cited:
**WO-A1-2013/048331       KR-A- 20100 057 430**
**US-A1- 2011 028 181       US-A1- 2013 023 302**

**Description**

TECHNICAL FIELD

The present disclosure relates to a method performed in a network node for classifying a neighbour cell.
The present disclosure also relates to a network node arranged to classify a neighbour cell.

BACKGROUND

Small cells are low-powered radio access nodes. The small cells may have a range of 10 meters to 1 or 2 kilometers. The small cells are "small" compared to a mobile macro cell, which may have a range of a few tens of kilometers. Small cells encompass femtocells, picocells, and microcells. Small-cell networks can also be realized by means of distributed radio technology consisting of centralized baseband units and remote radio heads. Beamforming technology (focusing a radio signal on a very specific area) can be utilized to further enhance or focus small cell coverage.
With mobile operators struggling to support the growth in mobile data traffic many are using Mobile data offloading as a more efficient use of radio spectrum. Small cells are a vital element to 3G data offloading, and many mobile network operators see small cells as vital to managing LTE Advanced spectrum more efficiently compared to using just macrocells.
Thus, it has been of increased interest to use multiple types of access nodes in wireless networks. The wireless network can use a mixture of small cells and macro cells, wherein the cells can be used on one or several frequency layers. It is a challenge to utilize the capacity of the small cells as much as possible.
In Korean patent application KR 2010 0057430 A is described a method for frequency assignment in a network with mix of cells of different size e.g. macro-cells and femto-cells.

SUMMARY

In the existing technology, a source cell is not aware of whether its neighbor cells are macro cells or small cells.
The present disclosure relates to a method performed in a network node of classifying a neighbour cell. The method comprises the steps of obtaining from a plurality of wireless devices information related to a power level of a source cell and a power level of at least one neighbour cell, and determining whether one of the at least one neighbour cells is a small cell, based on the obtained information.
One advantage with this method is that identification of small neighbor cells of a macro cell is enabled. This classification of neighbour cell(s) can be used for different purposes which at the end may yield to improve and/or optimize network and/or wireless device performances. For example, inter-frequency load balancing between macro cell and small cells can be performed. Further, many small cell-specific solutions not available today can now be implemented in the network node.
Another advantage is that the identification of small cells can be made by the network node without any communications with other network nodes. Further, this can be made even in multi vendor networks. As the information related to the power level for the source cell and the power level for at least one neighbour cell is obtained by the network node from a plurality of wireless devices, the network node has access to the information used in the determination whether the at least one neighbor cell is a small cell.
In one option, the power level for the source cell and the at least one neighbour cell is a Reference Signal Received Power, RSRP. One advantage with using the RSRP is that the information related to the power level for the source cell and the power level for at least one neighbour cell is obtained from the wireless devices without any modification of the wireless devices.
In one option, the step of determining whether the neighbour cell is a small cell comprises determining a relation between the power levels for the neighbour cell and the power levels for the source cell. Thereby, if the neighbour cell is a small cell, this would be apparent from the relation between the power levels for the neighbour cell and the power levels for the source cell.
In one option, the method comprises a step of determining a power level distribution for the source cell and/or neighbour cell. The step of determining whether the at least one neighbour cell is a small cell is based on the power level distribution for the source cell and/or neighbour cell. Characteristically, the power level distribution as obtained from the wireless devices for a small neighbour cell would vary within a larger range than the power level distribution as obtained from the wireless devices for a macro neighbour cell within a geographical area equivalent to a typical coverage area of a small cell.
In one option, the step of determining whether the at least one neighbour cell is a small cell is based on a determination about whether the power level distribution for the source cell and/or neighbour cell is within a predetermined range.

In one option, the method comprises a step of determining a subset of wireless devices for which a measure related to the power level for the at least one neighbour cell exceeds the predetermined value. In accordance with this option, the step of determining whether the at least one neighbour cell is a small cell is based on the power level distribution for the source cell and/or neighbour cell within the subset of wireless devices. One advantage of this is that less relevant measurements for determining whether the at least one neighbour cell is a small cell are left out.

In one option, the step of determining a subset of wireless devices for which the measure related to the power level for the at least one neighbour cell exceeds a predetermined value comprises identifying wireless devices for which the neighbour cell power level exceeds the predetermined value. In this option, only measurements which indicate that a hand-over would be considerable are taken into account in the determination whether the at least one neighbour cell is a small cell.

In one option, the method comprises a step of obtaining a distance between the neighbour cell and a centre of the source cell. In this option, the determination whether one predetermined neighbour cell is a small cell is based on the determined distance between the neighbour cell and the centre of the source cell. By introducing the distance between the neighbour cell and the centre of the source cell for the respective wireless devices in the determination of whether the at least one neighbour cell is a small cell the accuracy in the determination can be improved. The difference between the distances for the respective wireless device gives an indication about the extension of the neighbour cell.

In one option, wherein the method comprises a the step of obtaining a distance between the neighbour cell and a centre of the source cell and the determination whether one predetermined neighbour cell is a small cell is based on the information related to a distance between the neighbour cell and a centre of the source cell, the predetermined range is dependent on the information related to the distance between the neighbour cell and the centre of the source cell. Thereby the accuracy of the predetermined range can be improved.

In one option, the information related to the distance between the neighbour cell and a centre of the source cell is based on the power level values for the source cell and/or the neighbour cell. Thereby, no additional information is required for obtaining the distance.

In one option, the information related to the distance between the neighbour cell and a centre of the source cell is based on an average power level value for the source cell and/or the neighbour cell for the subset of wireless devices. The determination of the average power level provides a simple way of determining the distance.

In one option, the step of obtaining a distance between the neighbour cell and a centre of the source cell comprises determining a distance value for each of a plurality of wireless devices. The determination of whether the at least one neighbour cell is a small cell is based on a spread in the distance values. This can improve the accuracy in the determination.

In one option, the step of obtaining P1 information related to the source cell and the at least one neighbour cell comprises obtaining from the plurality of wireless devices information related to a distance to the wireless device, wherein the step of determining whether one predetermined neighbour cell is a small cell is based on the provided information related to the distance to the wireless device. In using this information, the accuracy in the information can be improved.

In one option, the information related to the distance to the wireless device is a time advance, TA, value.

In one option, the step of determining whether one predetermined neighbour cell is a small cell is initiated upon obtaining, from a predetermined number of wireless devices, the information related to the source cell and to the at least one neighbour cell.

In one option, the method comprises a step of evaluating the obtained information related to the source cell and to the at least one neighbour cell. The step of determining whether one predetermined neighbour cell is a small cell is then initiated if the evaluation indicates that a certain amount of information for determining whether one predetermined neighbour cell is a small cell has been obtained.

In one option, the method further comprises a step of storing the obtained information in a memory.

One embodiment of the present disclosure relates to a network node arranged to classify a neighbour cell. The network node comprises a receiver and a control element. The control element comprises an information obtaining element arranged to obtain, using the receiver, from a plurality of wireless devices information related to a power level of a source cell and a power level of at least one neighbour cell. The control element further comprises a determining element arranged to determine whether one of the at least one neighbour cells is a small cell, based on the information obtained by the information obtaining element..

In one option, the power level for at least one of the source cell and the at least one neighbour cell is a Reference Signal Received Power, RSRP.

In one option, the determining element is arranged to determine whether the neighbour cell is a small cell or not based on a relation between the power levels for the predetermined neighbour cell and the power levels for the source cell.

In one option, the receiver is arranged to receive the information obtained from a plurality of wireless devices related to a source cell and at least one neighbour cell.

In one option, the memory is arranged to store the information obtained from a plurality of wireless devices related to a source cell and at least one neighbour cell.

In one option, the network node is a EUTRA Node-B, eNB.

In one option, the network node is a Radio Network Controller, RNC.

One embodiment of the present disclosure relates to a computer program for executing the steps of the method in a network node for classifying a neighbour cell according to the above.

BRIEF DESCRIPTION OF THE DRAWINGS

Fig 1 is a schematic overview of a source cell and a neighbour cell.

Fig 2 is a diagram illustrating an example of source and neighbour cell power levels within the source cell.

Fig 3 is a diagram illustrating a second example of source and neighbour cell power levels within the source cell.

Fig 4 is a signal chart illustrating the signalling within a wireless device within a source cell.

Fig 5 is a flow chart illustrating an example of a process for performing cell type determination.

Fig 6 is a block scheme illustrating an example of a network node.

Fig 7 is a table illustrating an example of information stored in a memory in a network node.

DETAILED DESCRIPTION

The examples in this disclosure relate to an example with EUTRAN cells but the idea can be extended and used for other Radio Access Technologies, RATs as well.

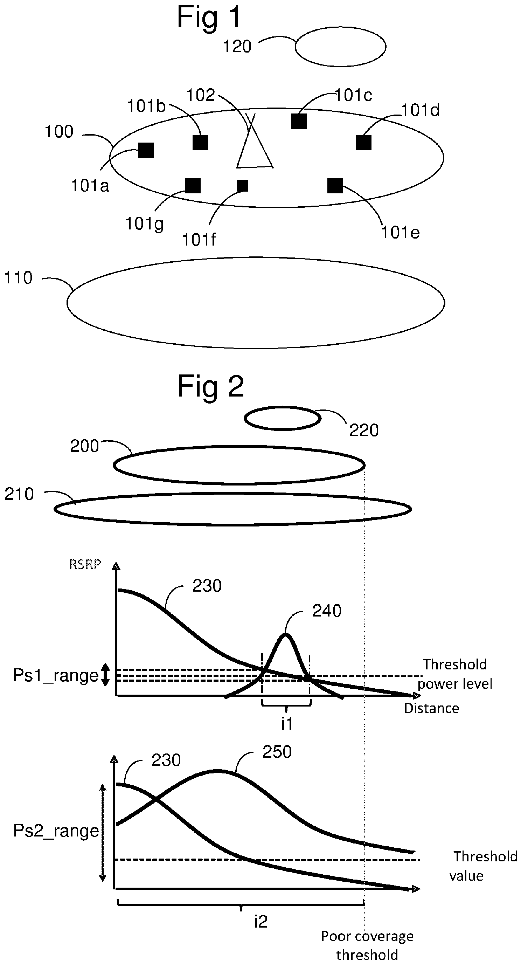

In Fig 1, a system for signalling in a network is illustrated. In the illustrated example, signalling is performed between a UMTS Terrestrial Radio Access, EUTRA, Node-B, eNB, 102 and User Equipments, UE, 101a, 101b, 101c, 101d, 101e, 101f, 101g in an Evolved UMTS Terrestrial Radio Access Network. The UEs are connected to a source cell 100. The source cell is a macro cell. A macrocell is a cell in a mobile phone network that provides radio coverage served by a high power cellular base station (tower). Generally, macrocells provide coverage larger than small cell. The antenna for macro cells are for example mounted on ground-based masts, rooftops and other existing structures, at a height that provides a clear view over the surrounding buildings and terrain. In the illustrated example, two neighbouring cells are shown. A first neighbour cell 110 is a macro cell. A second neighbour cell is a small cell 120. In this disclosure, a small cell is a cell that has a shorter reach than a macro cell. In this disclosure the term small cell is used even though other terms can be used, such as pico cell.

The eNB 102 obtains from a plurality of UEs information related to the source cell and at least one neighbour cell. The information comprises information related to a power level of the source cell and a power level of the at least one neighbour cell. The eNB 102 determines whether one predetermined neighbour cell is a small cell or not, based on the obtained information related to the power level for the source cell and the power level for the at least one neighbour cell.

The UEs 101a, 101b, 101c, 101d, 101e, 101f, 101 are arranged to perform measurements to provide the power level of the source cell and of the at least one neighbour cell. The measurements are in one example ongoing on a number of UEs randomly selected in the source cell to provide the power levels. The measurements are for example performed on one or a plurality of neighbour frequencies. The measurements are in one example performed using any Radio Access Technology, RAT. If there are already existing useful measurements, these measurements can be reused. In one example, background measurements are made. The background measurements are for example of type A4. In one example, event measurements on neighbor received power are made. This measurement includes in one example the source received power as well. The information related to the measured power level of the source cell and the at least one neighbour cell is, as is apparent from the above, transmitted to the eNB 102.

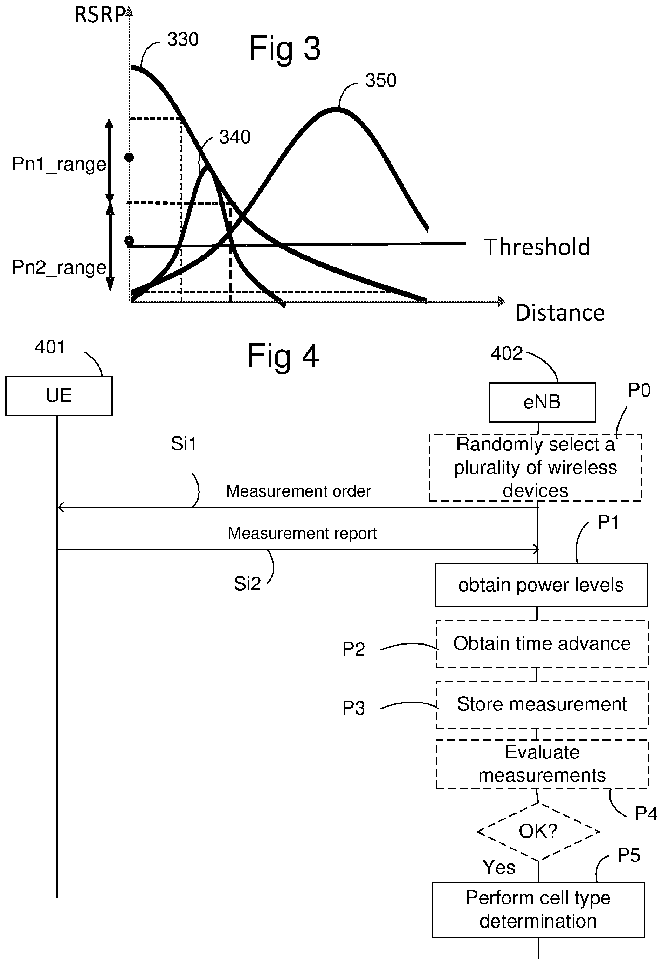

In Figure 4, an example of the signaling between a UE 401 and an eNB 402 when executing the proposed method for classifying a neighbour cell is illustrated. Those small cells whose coverage area is part of the coverage area of the source cell are identified.

The information that a neighbour cell is a small cell can be used to improve both network and UE performances by applying specific rules when knowing the neighbor cell is a small cell.

In the scheme of figure 4, the eNB obtains P1 from a plurality of wireless devices information related to a power level for a source cell and a power level for at least one neighbour cell, and determines P5 whether the at least one neighbour cell is a small cell, based on the obtained information. The power level for the source cell and the at least one neighbour cell is in one example a Reference Signal Received Power, RSRP.

For example, the eNB 402 selects P0 a plurality of wireless devices for measurement. The selection is in one example made randomly. Further, the eNB 402 orders Si1 measurements from the UE 401. The UE 401 then responds with reporting Si2 information related to a power level for both source cell and neighbour cell(s). The power level for the source cell and the power level for the neighbour cell(s) are then obtained P1 in the eNB. In an optional step, the eNB 402 stores P3 the obtained information related to the power levels of the source cell and the neighbour cell(s).

In one example, the measurement report Si2 from the UE 401 comprises also a timing advance, TA, value from the source cell. The TA value is one example also obtained P2. The TA value is in one example stored P3 along with the information related to the power level for the source cell and for the neighbour cell(s).

When the stored measurements have reached a certain amount, a cell type evaluation is performed to determine P5 whether the at least one neighbour cell is a small cell. In one example, the step of determining whether the at least one neighbour cell is a small cell is initiated upon obtaining, from a predetermined number of wireless devices, the information related to the source cell and to the at least one neighbour cell. In one example, an evaluation P4 of the measurements is made. The evaluation results in a decision whether the step P5 of determining whether the at least one neighbour cell is a small cell, is to be performed. In one example, the evaluation is made to decide whether a certain amount of measurements are obtained. If not, the process is in one example stopped until the certain amount of measurements is stored. In an alternative example, the process goes back to the step of order Si1 measurements.

If the certain amount of measurements have been reached, the cell type evaluation is performed to determine P5 whether the at least one neighbour cell is a small cell.

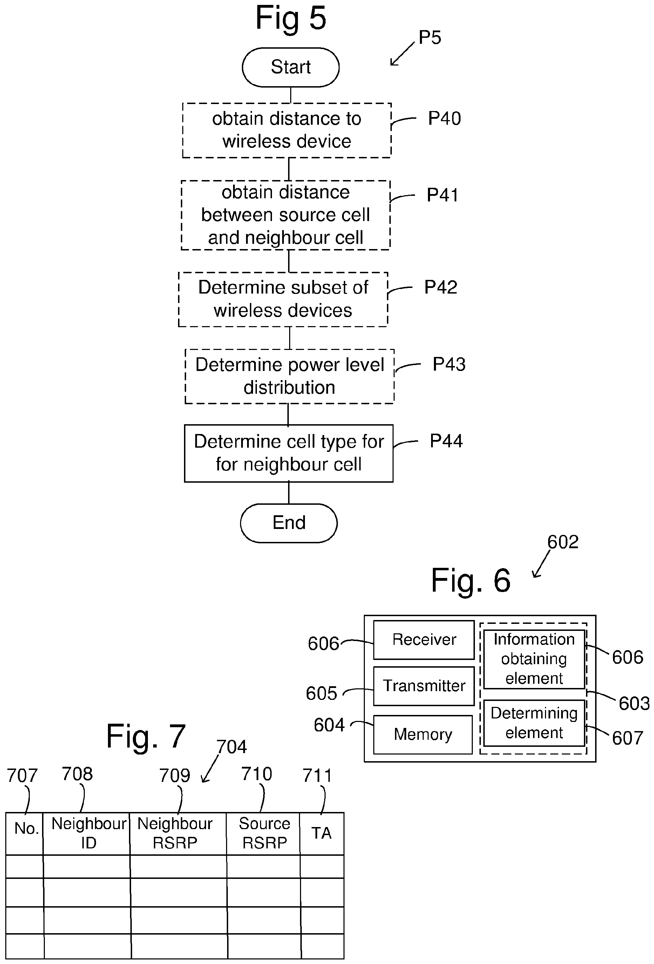

Figure 5 illustrates a process for determining P5 whether at least one neighbour cell is a small cell based on obtained information related to a power level for a source cell and a power level for at least one neighbour cell. In one example, the obtained information also is related to a distance to the wireless device. In one example, the information related to the distance to the wireless device is a time advance, TA, value. A step of determining P44 whether one predetermined neighbour cell is a small cell is in one example based on a predetermined relation between the power levels for the predetermined neighbour cell and the power levels for the source cell.

If the information related to the source cell and the at least one neighbour cell comprises information related to a distance to the wireless device, this information is obtained in a step P40. The step of determining P44 whether one predetermined neighbour cell is a small cell is in one example based on the information related to the distance to the wireless device.

In one example, the process further comprises a step of obtaining P41 a distance between the neighbour cell and a centre of the source cell. The determining whether one predetermined neighbour cell is a small cell is in one example based on the information related to the distance between the neighbour cell and the centre of the source cell.

In one example, the information related to the distance between the neighbour cell and a centre of the source cell is determined based on the power level values for the source cell and/or the neighbour cell. In one example, the information related to the distance between the neighbour cell and a centre of the source cell is determined based on an average power level value for the source cell and/or the neighbour cell for the subset of wireless devices.

In one example, the step of obtaining P41 a distance between the neighbour cell and a centre of the source cell comprises determining a distance value for each of a plurality of wireless devices. The determination P44 of whether the at least one neighbour cell is a small cell is based on a spread in the distance values. In one example, a small cell is identified if the spread exceeds a predetermined value

In one example, the process comprises a step of determining P42 a subset of wireless devices for which a measure related to the power level for the at least one neighbour cell exceeds a predetermined value. The step of determining P42 a subset of wireless devices for which the measure related to the power level for the at least one neighbour cell exceeds a predetermined value comprises in one example identifying wireless devices for which the neighbour cell power level exceeds a threshold power level. The step of determining P42 a subset of wireless devices for which the measure related to the power level for the at least one neighbour cell exceeds a predetermined value comprises in one example identifying wireless devices for which the neighbour cell power level exceeds the power level of other neighbour cells, i.e. the neighbour cell is the strongest neighbour cell. The step of determining P44 whether the at least one neighbour cell is a small cell is then based on the power level distribution for the source cell and/or neighbour cell within the subset of wireless devices. In one example, the wireless devices are randomly selected.

In one example, the process comprises a step of determining P43 a power level distribution for the source cell and/or neighbour cell, and basing the determination P44 whether the at least one neighbour cell is a small cell on the power level distribution for the source cell and/or neighbour cell. In one example, the step of determining P44 whether the at least one neighbour cell is a small cell is based on a determination about whether the power level distribution for the source cell and/or neighbour cell is within a predetermined range. The predetermined range is in one example dependent on the information related to the distance between the neighbour cell and the centre of the source cell.

In Figure 6, a network node 602 is arranged to classify a neighbour cell. The network node is in one example a EUTRA Node-B, eNB. The network node is in one example a Radio Network Controller, RNC.

The network node 602 comprises a receiver 606, a transmitter 605, a memory 604 and a control element 603. The control element 603 is arranged to determine whether a predetermined neighbour cell is a small cell, based on information obtained from a plurality of wireless devices. The information relates to a power level for the source cell and a power level for the at least one neighbour cell.

The receiver 606 is arranged to receive the information obtained from a plurality of wireless devices related to a source cell and at least one neighbour cell. The power level for at least one of the source cell and the at least one neighbour cell is in one example a Reference Signal Received Power, RSRP.

The memory 604 is arranged to store the information obtained from a plurality of wireless devices related to a source cell and at least one neighbour cell. The memory is in one example arranged to store software for determine whether the neighbour cell is a small cell or not.

The control element 603 is arranged to determine whether the neighbour cell is a small cell or not based on a relation between the power levels for the predetermined neighbour cell and the power levels for the source cell.

The control element comprises an information obtaining element 606 arranged to obtain, using the receiver, from a plurality of wireless devices information related to a power level of a neighbour cell and a power level of at least one neighbour cell. The control element further comprises a determining element 607 arranged to determine whether one of the at least one neighbour cells is a small cell, based on the information obtained by the information obtaining element

In figure 7, a memory 704 is arranged to store the information obtained from a plurality of wireless devices related to a source cell and at least one neighbour cell. The memory is arranged to store a plurality of measurements each identified with a number 707 or the like. For each measurement, at least one neighbour power level 709 and a source power level 710 is stored. Further, information related to a neighbour ID 708 is in one example stored. Further a distance value such as a time advance, TA, value 711 is in one example stored.

Even though the disclosure has been related to signalling in a EUTRAN, the methods of the disclosure herein can be implemented in other networks. For example, a Radio Network Controller, RNC, can be implemented with the method for classifying a neighbour cell.

In Fig 2, examples of diagrams are illustrated, wherein it is assumed that a source cell 200 has a first neighbour 220 and a second neighbour 210. The first neighbour cell 220 is a small cell. The second cell 210 is a macro cell.

In the illustrated diagrams the upper diagram shows a power level curve 230 for the source cell 200 and a power level curve 240 for the small cell 220 as a function of the distance to a center of the source cell. The lower diagram shows the power level curve 230 for the source cell 200 and a power level curve 250 for the of the macro cell 210 as a function of the distance to a center of the source cell. In the illustrated example, there is one neighbor cell on each frequency each represented by one diagram of Figure 2. However, in an alternative example, all neighbours are on the same frequency. In the illustrated example the power levels are Reference Symbol Received Power, RSRP.

In the illustrated example, a threshold power level is set. In one example, the threshold power level is set to a value larger than the minimum required received Reference Symbol Received Power (RSRP) level in the E-UTRA frequency for cell reselection. In the illustrated example, a poor coverage threshold is set. In one example, the poor coverage threshold is determined by A2 on source.

In the illustrated upper example, the power level of the small cell 220 exceeds the threshold power level within an interval $i1$. Within this interval the power levels of the source cell vary within a power level range $P_{s1\_range}$.

In the illustrated lower example, the power level of the macro cell 210 exceeds the threshold power level within an interval i2. Within this interval, the power levels of the source cell vary within a power level range $P_{s2\_range}$.

Since the small cell's coverage range is expected to be considerably smaller than that of macro cells, it is expected that a set of UEs which all report the same neighboring cell as strongest cell, will measure a smaller range of RSRP values for their source cell, if the strongest neighboring cell is a small cell compared to it being a macro cell. In one example, the RSRP range of the source cell corresponding to each neighbor is used for identifying those neighbor small cells.

In Figure 3, an example of a diagram is illustrated, wherein it is assumed that a source cell has a first neighbour and a second neighbour. The first neighbour cell is a small cell. The second cell is a macro cell.

In the illustrated diagram, a power level curve 330 for the source cell, a power level curve 340 for the small cell and a power level curve 350 for the macro cell are illustrated as a function of the distance to a center of the source cell.

In the illustrated example, there is one neighbor frequency and the two neighbor cells are on that frequency. However, in an alternative example, the neighbour cells are on different frequencies.

In the scenario of Figure 3, the small cell is closer to the source cell's center than in the example of Figure 2. Then, the power level range of the source cell, when the small cell is the strongest neighbor cell, may be very large. This is a result of the fact that the path loss has not a linear relation to distance.

For macro cell in urban and suburban area the path loss can be calculated as

$$L = 40 \cdot (1 - 4 \cdot 10^{-3} \cdot \text{Dhb}) \cdot \log_{10}(\text{R}) - 18 \cdot \log_{10}(\text{Dhb}) + 21 \cdot \log_{10}(\text{f}) + 80\text{dB}$$

where L is the path loss and R is the distance between the eNB and UE.

In this scenario, one proposal is to correlate a power level range, wherein the respective neighbour cell is the strongest neighbour cell, to an average value or the like of the source RSRP in this range. In the illustrated example, the small cell with the power level curve 340 is the strongest neighbour cell in a first power level range $P_{n1\_range}$. Further the macro cell with the power level curve 350 is the strongest neighbour cell in a second power level range $P_{n2\_range}$.

The average value is depicted as bold circles on the y-axis of the diagram in Fig 3. This average value or the like identifies where in the source cell the specific neighbor is located, i.e. whether it is close to the center or close to the border. Depending on this information the expected power level ranges for small cells and macros are different. An algorithm is in one example used for correlating a power level range, wherein a predetermined neighbour cell is a strongest neighbour cell with the average value or the like to identify if the neighbour is a small cell or not. In one example, any identified neighbor cell close to the border is excluded as a candidate small cell in order to avoid miss-interpreting a neighbor macro cell with a very little coverage overlap with the source cell, as a small cell. Table below is a simple example for correlating the indices mentioned above to identify target pico cells.

| RSRP zones [dBm] | 1 -50 to -63 | 2 -63 to -75 | 3 -75 to -87 | 4 -87 to -100 |
|---|---|---|---|---|
| Expected source RSRP range corresponding to neighbour small cell | 20-30 dB | 15-20 dB | 10-15 dB | 5-10 dB |

Another possibility for solving this scenario is to use the measured power levels from both source and at least one neighbour cell. The relation between the source cell power level and the neighbour cell power level is different depending on cell type in a case that is similar to the situation from figure 3.

It is also possible to use other available information such as timing advance, TA, and/or the neighbor cells RSRP range and combine them with the RSRP range in the source cell to identify the small cells.

The timing advance, TA, holds information about the distance between the source cell antenna and the individual UE. For a small neighbor cell, the TA range is characteristically smaller than for a macro cell. A small cell is only the strongest neighbor cell for a short TA range, while a macro cell is strongest for a longer TA value range.

There is also a possibility to use the absolute power level range as an indicator on the distance from cell antenna. The power level range on the source cell is practically the same for both the small cell and the macro cell. However the path loss from the source represents a smaller distance, which can be identified using the absolute power level from the source cell.

Different combinations of measured power level values from the source cell, measured power level values from the neighbour cell(s) and TA values can be used to identify small cells. The power level values can be used both in relation to each other but also as absolute values.

**Claims**

1.    A method performed in a network node (102) of classifying a neighbour cell (110/120), comprising the steps of:

   - obtaining (P1) from a plurality of wireless devices (101a-f) information related to a power level of a source cell (100) and a power level of at least one neighbour cell (110/120), and
   - determining (P5, P44) whether one of the at least one neighbour cells (110/120) is a small cell, based on the obtained information.

2.    The method according to claim 1, wherein the power level for the source cell (100) and the at least one neighbour cell (110/120) is a Reference Signal Received Power, RSRP.

3.    The method according to any of the preceding claims, wherein the step of determining (P5, P44) whether the neighbour cell (110/120) is a small cell comprises determining a relation between the obtained power levels for the neighbour cell (110/120) and the power levels for the source cell (100).

4.    The method according to any of the preceding claims, wherein the method further comprises:

- determining (P43) a power level distribution for the source cell (100)and/or neighbour cell (110/120), and basing the determination (P44) whether the at least one neighbour cell (110/120) is a small cell on the power level distribution for the source cell (100) and/or neighbour cell (110/120).

5. A method according to any of the preceding claims, further comprising the step of:

- determining (P42) a subset of wireless devices (101a-f) for which a measure related to the power level for the at least one neighbour cell (110/120) exceeds a predetermined value and

basing the determination (P44) of whether the at least one neighbour cell (110/120) is a small cell on the power level distribution for the source cell (100) and/or neighbour cell (110/120) within the subset of wireless devices (101a-f).

6. A method according to claim 5, wherein the step of determining (P42) a subset of wireless devices (101a-f) for which the measure related to the power level for the at least one neighbour cell (110/120) exceeds a predetermined value comprises identifying wireless devices (101a-f) for which the neighbour cell power level exceeds the predetermined value.

7. A method according to any of the claims 4 - 6, wherein the determination (P44) of whether the at least one neighbour cell (110/120) is a small cell is based on a determination whether the power level distribution for the source cell (100) and/or neighbour cell (110/120) is within a predetermined range.

8. A method according to any of the preceding claims, further comprising the step of: obtaining (P41) a distance between the neighbour cell (110/120) and a centre of the source cell (100) wherein the determination whether one predetermined neighbour cell (110/120) is a small cell is based on information related to the distance between the neighbour cell (110/120) and the centre of the source cell (100).

9. A method according to claim 7, further comprising a step of

- obtaining (P41) a distance between the neighbour cell (110/120) and a centre of the source cell, (100) and

wherein the determination whether one predetermined neighbour cell (110/120) is a small cell or not is based on information related to the determined distance between the neighbour cell (110/120) and a centre of the source cell (100) and wherein the predetermined range is dependent on the information related to the distance between the neighbour cell (110/120) and the centre of the source cell (100).

10. A method according to claim 8 or 9, wherein the information related to the distance between the neighbour cell (110/120) and a centre of the source cell (100) is based on the power level values for the source cell (100) and/or the neighbour cell (110/120).

11. A method according to claim 10, wherein the information related to the distance between the neighbour cell (110/120) and a centre of the source cell (100) is based on an average power level value for the source cell (100) and/or the neighbour cell (110/120) for the subset of wireless devices (101a-f).

12. A method according to any of the claims wherein the step of obtaining (P41) a distance between the neighbour cell (110/120) and a centre of the source cell (100) comprises determining a distance value for each of a plurality of wireless devices (101a-f) and basing the determination (P44) of whether the at least one neighbour cell (110/120) is a small cell on a spread in the distance values.

13. A method according to any of the preceding claims, wherein the step of obtaining (P1) information related to the source cell (100) and the at least one neighbour cell (110/120) comprises obtaining from the plurality of wireless devices (101a-f) information related to a distance to the wireless device (101a-f), wherein the step of determining (P5) whether one predetermined neighbour cell (110/120) is a small cell is based on the obtained information related to the distance to the wireless device (101a-f).

14. A method according to any of the preceding claims, wherein the step of determining whether one predetermined neighbour cell (110/120) is a small cell is initiated upon obtaining, from a predetermined number of wireless devices (101a-f), the information related to the source cell (100) and to the at least one neighbour cell (110/120).

**15.** A method according to any of the preceding claims, further comprising a step of evaluating (P4) the obtained information related to the source cell (100) and to the at least one neighbour cell (110/120), wherein the step of determining whether one predetermined neighbour cell (110/120) is a small cell is initiated if the evaluation indicates that a certain amount of information for determining whether one predetermined neighbour cell (110/120) is a small cell has been obtained.

**16.** A method according to any of the preceding claims, further comprising a step of storing (P2) the obtained information in a memory (604).

**17.** A network node (102; 402; 602) arranged to classify a neighbour cell (110/120), said network node(102; 402; 602) comprising a receiver (606) and a control element (603), wherein the control element (603) comprises

an information obtaining element (606) arranged to obtain, using the receiver, from a plurality of wireless devices (101a-f) information related to a power level of a source cell (100) and a power level of at least one neighbour cell (110/120), and
a determining element (607) arranged to determine whether one of the at least one neighbour cells (110/120) is a small cell, based on the information obtained by the information obtaining element (606).

**18.** Computer program for executing the steps of the method in a network node for classifying a neighbour cell according to any of the claims 1 - 16.


**Patentansprüche**

**1.** Verfahren, durchgeführt in einem Netzknoten (102), zum Klassifizieren einer Nachbarzelle (110/120), umfassend die folgenden Schritte:

- Erlangen (P1) von Informationen bezüglich eines Leistungspegels einer Quellzelle (100) und eines Leistungspegels zumindest einer Nachbarzelle (110/120) von einer Vielzahl von drahtlosen Vorrichtungen (101a-f), und
- Bestimmen (P5, P44), auf Grundlage der erlangten Informationen, ob eine der zumindest einen Nachbarzelle (110/120) eine kleine Zelle ist.

**2.** Verfahren nach Anspruch 1, wobei der Leistungspegel für die Quellzelle (100) und die zumindest eine Nachbarzelle (110/120) eine Referenzsignalempfangsleistung (RSRP) ist.

**3.** Verfahren nach einem der vorstehenden Ansprüche, wobei der Schritt des Bestimmens (P5, P44), ob die Nachbarzelle (110/120) eine kleine Zelle ist, Bestimmen einer Relation zwischen den erlangten Leistungspegeln für die Nachbarzelle (110/120) und den Leistungspegeln für die Quellzelle (100) umfasst.

**4.** Verfahren nach einem der vorstehenden Ansprüche, wobei das Verfahren ferner Folgendes umfasst:

- Bestimmen (P43) einer Leistungspegelverteilung für die Quellzelle (100) und/oder Nachbarzelle (110/120) und Basieren der Bestimmung (P44), ob die zumindest eine Nachbarzelle (110/120) eine kleine Zelle ist, auf die Leistungspegelverteilung für die Quellzelle (100) und/oder Nachbarzelle (110/120).

**5.** Verfahren nach einem der vorstehenden Ansprüche, ferner umfassend den folgenden Schritt:

- Bestimmen (P42) einer Untermenge von drahtlosen Vorrichtungen (101a-f), für die ein Maß bezüglich des Leistungspegels für die zumindest eine Nachbarzelle (110/120) einen vorbestimmten Wert übersteigt und Basieren der Bestimmung (P44), ob die zumindest eine Nachbarzelle (110/120) eine kleine Zelle ist, auf die Leistungspegelverteilung für die Quellzelle (100) und/oder Nachbarzelle (110/120) innerhalb der Untermenge von drahtlosen Vorrichtungen (101a-f).

**6.** Verfahren nach Anspruch 5, wobei der Schritt des Bestimmens (P42) einer Untermenge von drahtlosen Vorrichtungen (101a-f), für die das Maß bezüglich des Leistungspegels für die zumindest eine Nachbarzelle (110/120) einen vorbestimmten Wert übersteigt, Identifizieren von drahtlosen Vorrichtungen (101a-f), für die der Nachbarzellenleistungspegel den vorbestimmten Wert übersteigt, umfasst.

7. Verfahren nach einem der Ansprüche 4-6, wobei die Bestimmung (P44), ob die zumindest eine Nachbarzelle (110/120) eine kleine Zelle ist, auf einer Bestimmung, ob die Leistungspegelverteilung für die Quellzelle (100) und/oder Nachbarzelle (110/120) innerhalb eines vorbestimmten Bereichs liegt, basiert.

8. Verfahren nach einem der vorstehenden Ansprüche, ferner umfassend den folgenden Schritt:
Erlangen (P41) einer Distanz zwischen der Nachbarzelle (110/120) und einer Mitte der Quellzelle (100), wobei die Bestimmung, ob eine vorbestimmte Nachbarzelle (110/120) eine kleine Zelle ist, auf Informationen bezüglich der Distanz zwischen der Nachbarzelle (110/120) und der Mitte der Quellzelle (100) basiert.

9. Verfahren nach Anspruch 7, ferner umfassend einen folgenden Schritt:

   - Erlangen (P41) einer Distanz zwischen der Nachbarzelle (110/120) und einer Mitte der Quellzelle (100) und

   wobei die Bestimmung, ob eine vorbestimmte Nachbarzelle (110/120) eine kleine Zelle ist oder nicht, auf Informationen bezüglich der bestimmen Distanz zwischen der Nachbarzelle (110/120) und einer Mitte der Quellzelle (100) basiert und wobei der vorbestimmte Bereich von den Informationen bezüglich der Distanz zwischen der Nachbarzelle (110/120) und der Mitte der Quellzelle (100) abhängig ist.

10. Verfahren nach Anspruch 8 oder 9, wobei die Informationen bezüglich der Distanz zwischen der Nachbarzelle (110/120) und einer Mitte der Quellzelle (100) auf den Leistungspegelwerten für die Quellzelle (100) und/oder die Nachbarzelle (110/120) basieren.

11. Verfahren nach Anspruch 10, wobei die Informationen bezüglich der Distanz zwischen der Nachbarzelle (110/120) und einer Mitte der Quellzelle (100) auf einem durchschnittlichen Leistungspegelwert für die Quellzelle (100) und/oder die Nachbarzelle (110/120) für die Untermenge von drahtlosen Vorrichtungen (101a-f) basieren.

12. Verfahren nach einem der Ansprüche, wobei der Schritt des Erlangens (P41) einer Distanz zwischen der Nachbarzelle (110/120) und einer Mitte der Quellzelle (100) Bestimmen eines Distanzwerts für jede einer Vielzahl von drahtlosen Vorrichtungen (101a-f) und Basieren der Bestimmung (P44), ob die zumindest eine Nachbarzelle (110/120) eine kleine Zelle ist, auf eine Spanne in den Distanzwerten umfasst.

13. Verfahren nach einem der vorstehenden Ansprüche, wobei der Schritt des Erlangens (P1) von Informationen bezüglich der Quellzelle (100) und der zumindest einen Nachbarzelle (110/120) Erlangen von Informationen bezüglich einer Distanz zu der drahtlosen Vorrichtung (101a-f) von der Vielzahl von drahtlosen Vorrichtungen (101a-f) umfasst, wobei der Schritt des Bestimmens (P5), ob eine vorbestimmte Nachbarzelle (110/120) eine kleine Zelle ist, auf den erlangten Informationen bezüglich der Distanz zu der drahtlosen Vorrichtung (101a-f) basiert.

14. Verfahren nach einem der vorstehenden Ansprüche, wobei der Schritt des Bestimmens, ob eine vorbestimmte Nachbarzelle (110/120) eine kleine Zelle ist, bei Erlangen der Informationen bezüglich der Quellzelle (100) und der zumindest einen Nachbarzelle (110/120) von einer vorbestimmten Anzahl von drahtlosen Vorrichtungen (101a-f) eingeleitet wird.

15. Verfahren nach einem der vorstehenden Ansprüche, ferner umfassend einen Schritt des Evaluierens (P4) der erlangten Informationen bezüglich der Quellzelle (100) und der zumindest einen Nachbarzelle (110/120), wobei der Schritt des Bestimmens, ob eine vorbestimmte Nachbarzelle (110/120) eine kleine Zelle ist, eingeleitet wird, wenn die Evaluierung angibt, dass eine gewisse Menge an Informationen zum Bestimmen, ob eine vorbestimmte Nachbarzelle (110/120) eine kleine Zelle ist, erlangt wurde.

16. Verfahren nach einem der vorstehenden Ansprüche, ferner umfassend einen Schritt des Speicherns (P2) der erlangten Informationen in einem Speicher (604).

17. Netzknoten (102; 402; 602), angeordnet zum Klassifizieren einer Nachbarzelle (110/120), wobei der Netzknoten (102; 402; 602) einen Empfänger (606) und ein Steuerelement (603) umfasst, wobei das Steuerelement (603)

   ein Informationserlangungselement (606), angeordnet zum Erlangen von Informationen bezüglich eines Leistungspegels einer Quellzelle (100) und eines Leistungspegels zumindest einer Nachbarzelle (110/120) unter Verwendung des Empfängers von einer Vielzahl von drahtlosen Vorrichtungen (101a-f), und
   ein Bestimmungselement (607), angeordnet zum Bestimmen, ob eine der zumindest einen Nachbarzelle (110/120) eine kleine Zelle ist, auf Grundlage der Informationen, die von dem Informationserlangungselement (606) erlangt wurden, umfasst.

18. Computerprogramm zum Ausführen der Schritte des Verfahrens in einem Netzknoten zum Klassifizieren einer Nachbarzelle nach einem der Ansprüche 1-16.

**Revendications**

1. Procédé exécuté dans un noeud de réseau (102) permettant de classifier une cellule voisine (110/120), comprenant les étapes consistant à :

   - obtenir (P1) à partir d'une pluralité de dispositifs sans fil (101a-f) des informations liées à un niveau de puissance d'une cellule source (100) et à un niveau de puissance d'au moins une cellule voisine (110/120), et
   - déterminer (P5, P44) si l'une de la au moins une cellule voisine (110/120) est une petite cellule, sur la base des informations obtenues.

2. Procédé selon la revendication 1, dans lequel le niveau de puissance pour la cellule source (100) et la au moins une cellule voisine (110/120) est une Puissance Reçue de Signal de Référence, RSRP.

3. Procédé selon l'une quelconque des revendications précédentes, dans lequel l'étape consistant à déterminer (P5, P44) si la cellule voisine (110/120) est une petite cellule comprend la détermination d'une relation entre les niveaux de puissance obtenus pour la cellule voisine (110/120) et les niveaux de puissance pour la cellule source (100).

4. Procédé selon l'une quelconque des revendications précédentes, dans lequel le procédé comprend en outre :

   - la détermination (P43) d'une distribution de niveau de puissance pour la cellule source (100) et/ou la cellule voisine (110/120), et le fait de baser la détermination (P44) de si la au moins une cellule voisine (110/120) est une petite cellule sur la distribution de niveau de puissance pour la cellule source (100) et/ou la cellule voisine (110/120).

5. Procédé selon l'une quelconque des revendications précédentes, comprenant en outre l'étape consistant à :

   - déterminer (P42) un sous-ensemble de dispositifs sans fil (101a-f) pour lequel une mesure liée au niveau de puissance pour la au moins une cellule voisine (110/120) dépasse une valeur prédéterminée et

   baser la détermination (P44) de si la au moins une cellule voisine (110/120) est une petite cellule sur la distribution de niveau de puissance pour la cellule source (100) et/ou la cellule voisine (110/120) dans le sous-ensemble de dispositifs sans fil (101a-f).

6. Procédé selon la revendication 5, dans lequel l'étape consistant à déterminer (P42) un sous-ensemble de dispositifs sans fil (101a-f) pour lequel la mesure liée au niveau de puissance pour la au moins une cellule voisine (110/120) dépasse une valeur prédéterminée comprend l'identification de dispositifs sans fil (101a-f) pour lesquels le niveau de puissance de cellule voisine dépasse la valeur prédéterminée.

7. Procédé selon l'une quelconque des revendications 4 à 6, dans lequel la détermination (P44) de si la au moins une cellule voisine (110/120) est une petite cellule est basée sur une détermination de si la distribution de niveau de puissance pour la cellule source (100) et/ou la cellule voisine (110/120) est dans une plage prédéterminée.

8. Procédé selon l'une quelconque des revendications précédentes, comprenant en outre l'étape consistant à : obtenir (P41) une distance entre la cellule voisine (110/120) et un centre de la cellule source (100), où la détermination de si une cellule voisine prédéterminée (110/120) est une petite cellule est basée sur des informations liées à la distance entre la cellule voisine (110/120) et le centre de la cellule source (100).

9. Procédé selon la revendication 7, comprenant en outre une étape consistant à

   - obtenir (P41) une distance entre la cellule voisine (110/120) et un centre de la cellule source (100), et

dans lequel la détermination de si une cellule voisine prédéterminée (110/120) est une petite cellule ou non est basée sur des informations liées à la distance déterminée entre la cellule voisine (110/120) et un centre de la cellule source (100) et dans lequel la plage prédéterminée dépend des informations liées à la distance entre la cellule voisine (110/120) et le centre de la cellule source (100).

10. Procédé selon la revendication 8 ou 9, dans lequel les informations liées à la distance entre la cellule voisine (110/120) et un centre de la cellule source (100) sont basées sur les valeurs de niveau de puissance pour la cellule source (100) et/ou la cellule voisine (110/120).

11. Procédé selon la revendication 10, dans lequel les informations liées à la distance entre la cellule voisine (110/120) et un centre de la cellule source (100) sont basées sur une valeur de niveau de puissance moyenne pour la cellule source (100) et/ou la cellule voisine (110/120) pour le sous-ensemble de dispositifs sans fil (101a-f).

12. Procédé selon l'une quelconque des revendications, dans lequel l'étape consistant à obtenir (P41) une distance entre la cellule voisine (110/120) et un centre de la cellule source (100) comprend la détermination d'une valeur de distance pour chacun d'une pluralité de dispositifs sans fil (101a-f) et le fait de baser la détermination (P44) de si la au moins une cellule voisine (110/120) est une petite cellule sur un étalement des valeurs de distance.

13. Procédé selon l'une quelconque des revendications précédentes, dans lequel l'étape consistant à obtenir (P1) des informations liées à la cellule source (100) et à la au moins une cellule voisine (110/120) comprend l'obtention à partir de la pluralité de dispositifs sans fil (101a-f) d'informations liées à une distance jusqu'au dispositif sans fil (101a-f), dans lequel l'étape consistant à déterminer (P5) si une cellule voisine prédéterminée (110/120) est une petite cellule est basée sur les informations obtenues liées à la distance jusqu'au dispositif sans fil (101a-f).

14. Procédé selon l'une quelconque des revendications précédentes, dans lequel l'étape consistant à déterminer si une cellule voisine prédéterminée (110/120) est une petite cellule est initiée lors de l'obtention, à partir d'un nombre prédéterminé de dispositifs sans fil (101a-f), des informations liées à la cellule source (100) et à la au moins une cellule voisine (110/120).

15. Procédé selon l'une quelconque des revendications précédentes, comprenant en outre une étape consistant à évaluer (P4) les informations obtenues liées à la cellule source (100) et à la au moins une cellule voisine (110/120), dans lequel l'étape consistant à déterminer si une cellule voisine prédéterminée (110/120) est une petite cellule est initiée si l'évaluation indique qu'une certaine quantité d'informations pour déterminer si une cellule voisine prédéterminée (110/120) est une petite cellule ont été obtenues.

16. Procédé selon l'une quelconque des revendications précédentes, comprenant en outre une étape consistant à stocker (P2) les informations obtenues dans une mémoire (604).

17. Noeud de réseau (102 ; 402 ; 602) agencé pour classifier une cellule voisine (110/120), ledit noeud de réseau (102 ; 402 ; 602) comprenant un récepteur (606) et un élément de contrôle (603), dans lequel l'élément de contrôle (603) comprend
un élément d'obtention d'informations (606) agencé pour obtenir, en utilisant le récepteur, à partir d'une pluralité de dispositifs sans fil (101a-f) des informations liées à un niveau de puissance d'une cellule source (100) et à un niveau de puissance d'au moins une cellule voisine (110/120), et
un élément de détermination (607) agencé pour déterminer si l'une de la au moins une cellule voisine (110/120) est une petite cellule, sur la base des informations obtenues par l'élément d'obtention d'informations (606).

18. Programme d'ordinateur pour exécuter les étapes du procédé dans un noeud de réseau pour classifier une cellule voisine selon l'une quelconque des revendications 1 à 16.

# Fig 1

# Fig 2

RSRP

## Fig 3

330

350

340

Pn1_range

Pn2_range

Threshold

Distance

## Fig 4

401

UE

402

eNB

P0

Si1

Randomly select a
plurality of wireless
devices

Measurement order

Measurement report

P1

Si2

obtain power levels

P2

Obtain time advance

P3

Store measurement

Evaluate
measurements

P4

OK?

Yes

P5

Perform cell type
determination

# Fig 5

P5

```
        ( Start )
            |
┌ ─ ─ ─ ─ ─┴─ ─ ─ ─ ─ ┐
│  obtain distance to │ ── P40
│    wireless device  │
└ ─ ─ ─ ─ ─┬─ ─ ─ ─ ─ ┘
            |
┌ ─ ─ ─ ─ ─┴─ ─ ─ ─ ─ ┐
│   obtain distance   │ ── P41
│  between source cell│
│   and neighbour cell│
└ ─ ─ ─ ─ ─┬─ ─ ─ ─ ─ ┘
            |
┌ ─ ─ ─ ─ ─┴─ ─ ─ ─ ─ ┐
│  Determine subset of│ ── P42
│    wireless devices │
└ ─ ─ ─ ─ ─┬─ ─ ─ ─ ─ ┘
            |
┌ ─ ─ ─ ─ ─┴─ ─ ─ ─ ─ ┐
│ Determine power level│ ── P43
│     distribution     │
└ ─ ─ ─ ─ ─┬─ ─ ─ ─ ─ ┘
            |
┌──────────┴──────────┐
│ Determine cell type for│ ── P44
│   for neighbour cell   │
└──────────┬──────────┘
            |
         ( End )
```

# Fig. 6

602

| | |
|---|---|
| 606 — Receiver | Information obtaining element — 606 |
| 605 — Transmitter | |
| 604 — Memory | Determining element — 607 |

603

# Fig. 7

704

707  708  709  710  711

| No. | Neighbour ID | Neighbour RSRP | Source RSRP | TA |
|-----|--------------|----------------|-------------|-----|
|     |              |                |             |     |
|     |              |                |             |     |
|     |              |                |             |     |
|     |              |                |             |     |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20100057430 A